# EUROPÄISCHE PATENTSCHRIFT

(11) **EP 2 737 336 B1**
(45) Veröffentlichungstag und Bekanntmachung des Hinweises auf die Patenterteilung: **05.09.2018**
(21) Anmeldenummer: 12725421.7
(22) Anmeldetag: 01.06.2012
(51) Int. Cl.: G01S 7/521, G01S 15/93, B06B 1/02

(54) **KAPAZITIVER SCHALLWANDLER MIT FASERVERSTÄRKUNG**
CAPACITIVE SOUND TRANSDUCER WITH FIBRE REINFORCEMENT
TRANSDUCTEUR ACOUSTIQUE CAPACITIF DOTÉ D'UN RENFORT DE FIBRES

(30) Priorität: 29.07.2011 DE 102011080125
(43) Veröffentlichungstag der Anmeldung: 04.06.2014
(73) Patentinhaber: Robert Bosch GmbH, 70442 Stuttgart (DE)
(72) Erfinder: BARTYLLA, David, 64560 Riedstadt (DE); SCHUMANN, Michael, 70597 Stuttgart (DE)
(86) Internationale Anmeldenummer: PCT/EP2012/060422
(87) Internationale Veröffentlichungsnummer: WO 2013/017313

(56) Entgegenhaltungen:
- WO-A2-2004/010730
- US-A- 5 438 553
- US-A1- 2006 158 066

## Beschreibung

### Stand der Technik

Die Erfindung betrifft einen Schallwandler, umfassend eine Basiselektrode und eine schwingfähige Membran, die eine elektrisch leitfähige Schicht aufweist. Die Erfindung betrifft ferner ein Verfahren zur Herstellung eines Schallwandlers.

Schallwandler sind elektro-akustische Wandler, die Schallenergie in elektrische Energie oder elektrische Energie in Schallenergie umwandeln. Zum Empfangen von Schallwellen aus einem Raum oder zum Senden von Schallwellen in einen Raum wird typischerweise eine Kombination aus einer schwingfähigen Elektrodenmembran und einer Basiselektrode eingesetzt, um eine elektromechanische Wechselwirkung herbeizuführen. Die Funktionsweise solcher Schallwandler beruht dabei auf einem direkten Zusammenhang, der sich zwischen einer Krafteinwirkung auf die Membran und einer elektrischen Spannung der Elektrodenanordnung in Abhängigkeit des Abstands zwischen den Elektroden sowie der Kapazität der Elektrodenanordnung ergibt.

Ultraschallsensoren werden üblicherweise als Schallwandler eingesetzt, um Abstandsmessungen durchzuführen. Dazu wird ein Ultraschallsensor als Sender angesteuert, um einen Ultraschallimpuls auszusenden. Nach dem Senden wird der Ultraschallimpuls an einem innerhalb der Reichweite des Ultraschallsensors liegenden Objekts reflektiert und auf einen als Empfänger fungierenden Ultraschallsensor zurückgeworfen. Aus der Laufzeit des Ultraschallimpulses wird in einer dem Empfänger nachfolgenden Elektronik der Abstand zu dem reflektierenden Objekt bestimmt.

Aus DE 10 2006 038 597 A1 ist ein Ultraschallwandler bekannt, der als Distanzsensor am Fahrzeug eingesetzt werden kann. Der Wandler umfasst eine schwingfähige Membranelektrode und eine in einem Abstand zur Membranelektrode angeordnete Basiselektrode. Die Basiselektrode ist von einem auf einem Schaltungsträger angeordneten Leiterbahnzug gebildet, der wiederum mit einer Deckschicht versehen ist. Die Membranelektrode umfasst eine Trägerschicht und eine darauf aufgebrachte elektrisch leitfähige Schicht, wobei die elektrisch leitfähige Schicht auf der Basiselektrode zugewandten Seite der Membranelektrode ausgebildet ist.

Schallwandler, bei denen als Membranelektrode eine einseitig metallisierte Kunststofffolie verwendet wird, die unmittelbar auf der Basiselektrode aufliegt, werden auch als Sellwandler bezeichnet. Dabei liegt die Membranelektrode auf Erhebungen an der Oberfläche der Basiselektrode unmittelbar auf. Auf diese Weise bilden sich zwischen der Basiselektrode und der Membranelektrode dünne Luftpolster aus, in denen die Membranelektrode schwingen kann.

Schallwandler der vorstehend beschriebenen Art liefern zwar eine große Bandbreite und eine hohe Sensitivität. Allerdings sind die Schallwandler vor Umwelteinflüssen, wie zum Beispiel Feuchtigkeit, nur durch eine dünne Membran geschützt, die eine geringe mechanische Robustheit aufweist. Daher kann es bei Anwendungen in rauen Umgebungen durch Einwirkungen von außen, beispielsweise mechanische Einwirkungen oder Vibrationen, leicht zu Rissen in der Membran kommen. Derartige Risse verringern die Stabilität der Membran und begünstigen das Eintreten von Feuchtigkeit, was den Schallwandler negativ beeinflussen kann und insbesondere beim Gefrieren zur völligen Zerstörung des Schallwandlers führen kann. Aus der WO 2004/010730 A2 ist ein Schallwandler mit einer Schutzschicht aus einem Drahtgeflecht oder Drahtgitter bekannt.

### Offenbarung der Erfindung

Erfindungsgemäß wird ein Schallwandler gemäss Anspruch 1, insbesondere ein Ultraschallwandler, vorgeschlagen. In einer bevorzugten Ausführungsform ist der Schallwandler als Sellwandler ausgestaltet, wobei die Basiselektrode eine Oberflächenrauheit und die Membran mindestens eine isolierende Schicht und mindestens eine elektrisch leitfähige Schicht aufweist. Weiterhin kann die Membran mit mindestens einer isolierenden Schicht unmittelbar auf der Basiselektrode aufliegen.

Die Basiselektrode kann im Rahmen der vorliegenden Erfindung massiv aus einem elektrisch leitfähigen Werkstoff wie Kupfer, Messing oder Wolfram hergestellt sein oder als Leiterplatte ausgestaltet sein.

Für die Ausführung des erfindungsgemäßen Schallwandlers als Sellwandler kann die Oberflächenrauheit der Basiselektrode maßgeblich durch das zur Herstellung verwendeten Verfahren bestimmt werden. So kann sich im Fall einer massiven Elektrode unter anderem durch Polieren, Bedampfen oder Schleifen jeweils eine andere Oberflächenrauheit einstellen. Alternativ oder zusätzlich kann die Oberflächenrauheit durch bewusste Strukturierung der Oberfläche beispielsweise durch Sputtern, Ätzen, Fräsen oder durch Einbringen von Kerben mit speziellen Formen, beispielsweise V-förmig oder U-förmig, bewirkt werden. Ebenso können im Fall von Leiterplatten Standardmethoden zum Strukturieren von Leiterbahnzügen auf Leiterplatten zum Herstellen der Basiselektrode verwendet werden. Die Verwendung von Leiterplatten hat dabei den Vorteil, dass eine Leiterplatte mit zusätzlichen Schaltungselementen versehen werden kann.

Die Oberflächenrauheit der Basiselektrode bestimmt das Volumen der Hohlräume, die beim Auflegen der Membran zwischen der Basiselektrode und der Membran entstehen. Die Oberflächenrauheit bestimmt also das Volumen, in dem die Membran schwingen kann. Zusammen mit anderen Faktoren wie der Steifigkeit der Membran wirkt sich daher die Oberflächenrauheit auf die Resonanzfrequenz des Sellwandlers aus. Die entsprechende Oberflächenrauheit der Basiselektrode eines Sellwandlers kann bei Verwendung einer Polymermembran im µm-Bereich liegen, beispielsweise bis zu 100 µm. Die Resonanzfrequenz kann je nach Ausführung der Basiselektrode und der Membran im für das menschliche Ohr wahrnehmbaren Bereich oder einem für das menschliche Ohr nicht wahrnehmbaren Ultraschallbereich liegen. Insbesondere kann der erfindungsgemäße Schallwandler unterhalb der Resonanzfrequenz betrieben werden.

In einer Ausführungsform des erfindungsgemäßen Schallwandlers kann die Membran aus mindestens einem Polymer hergestellt sein, wobei das Polymer Polyamid (PA), Polyimid (PI), Polyethylenterephthalat (PET), biaxial orientiertes PET, Polysulfon (PSu), Polyacrylnitril, ein per- oder teilfluoriertes Polymer, ein teilkristallines Polymer, beispielsweise Polyvinylfluorid (PVF) oder ein Copolymer von Vinylfluorid mit Tetrafluorethylen oder Trifluorethylen, insbesondere biaxial gestreckten Polyvinylidenfluorid (PVDF) sein kann.

Alternative Ausführungsformen des erfindungsgemäßen Schallwandlers können auch eine Membran aus mindestens einem Metall aufweisen.

Die Membran ist vorzugsweise als flexible Membran ausgestaltet, die eine Dicke von einigen µm bis einige hundert µm aufweist. In einer weiteren Ausführungsform umfasst die Membran mehrere Schichten, vorzugsweise eine elektrisch leitfähige Schicht, gegebenenfalls eine isolierende Schicht und gegebenenfalls eine Faserschicht.

Die elektrisch leitfähige Schicht kann als separate Schicht in der Membran vorgesehen sein oder in die isolierende Schicht eingebettet sein. In einer weiteren Ausführungsform kann die elektrisch leitfähige Schicht durch Metallisierung beispielsweise einer Membran oder durch Einbringen von beispielsweise metallischen Partikeln, metallischen Fasern oder mindestens einer Metallfolie in die Membran realisiert werden. Erfindungsgemäss ist die Faserverstärkung durch das Einbringen von Fasern in die Membran realisiert. Bei der Verwendung von metallischen Fasern kann sowohl die Faserverstärkung als auch die elektrische Leitfähigkeit gemeinsam in einer Schicht realisiert werden, ohne dass es weiterer Vorkehrungen bedarf. Bevorzugt ist die elektrisch leitfähige Schicht durch elektrisch leitende Kohlenstofffasern gebildet.

In einer Ausführungsform ist die elektrisch leitfähige Schicht in einem oberen Bereich der Membran ausgebildet. Im vorliegenden Zusammenhang wird mit dem oberen Bereich der Membran ein Bereich bezeichnet, der sich zwischen der an die Basiselektrode angrenzenden isolierenden Schicht und der der Basiselektrode abgewandten Seite der Membran befindet. Zum Ausbilden der Elektrodenanordnung des erfindungsgemäßen Schallwandlers kann die Membran mit der isolierenden Schicht auf die Basiselektrode aufgebracht werden, so dass die Basiselektrode und die elektrisch leitfähige Schicht elektrisch voneinander isoliert sind und einen Plattenkondensator-ähnlichen Aufbau bilden. Die Membran kann dabei durch übliche Befestigungsmittel wie Kleben oder Klemmen im Randbereich auf der Basiselektrode fixiert werden.

In einer weiteren Ausführungsform kann die Faserverstärkung oberhalb der isolierenden Schicht vorgesehen sein, die unmittelbar an die Basiselektrode grenzt. Vorzugsweise ist die Faserverstärkung in dem oberen Bereich der Membran vorgesehen. Dabei bezeichnet der obere Bereich der Membran den Bereich, der sich zwischen der an die Basiselektrode angrenzenden isolierenden Schicht und der der Basiselektrode abgewandten Seite der Membran befindet. Besonders bevorzugt ist die Faserverstärkung auf der Seite der Membran ausgebildet, die der Basiselektrode abgewandt ist. Erfindungsgemäss ist die Faserverstärkung durch das Einbringen von Fasern in die Membran, insbesondere die elektrisch leitfähige Schicht und/oder eine isolierende Schicht, realisiert. Die Fasern können Kurzfasern mit einer Länge von 0,1 bis 1 mm, Langfasern mit einer Länge von 1 mm bis 50 mm und/oder Endlosfasern sein. Die einzelnen Fasern sind in die Membran eingebettet und können geordnet und/oder ungeordnet verteilt sein. Zusätzlich oder alternativ können die Fasern geordnet und/oder ungeordnet in mindestens einem Flächengebilde enthalten sein, wobei das Flächengebilde in die Membran eingebettet ist. Dabei kann das Flächengebilde geordnete und/oder ungeordnete Fasern umfassen, die in einem Gewebe, einem Multiaxialgelege, einem Geflecht, einem Feinschnitt, einem Abstandsgewebe, einem Gestrick, einem Gelege, einer Fasermatte, einem Filz oder einem Vlies enthalten sind. Bevorzugt ist ein Gewebe.

Üblicherweise werden Gewebe, Gelege oder Gestricke aus Endlosfasern gebildet, die beispielsweise gestreckt in einer Ebene vorliegen können, eine Ondulation, d.h. künstlich eingebrachte Wellen, aufweisen können und/oder mit Komponenten in allen drei Raumrichtungen verteilt sein können. Kurz- und Langfasern sind typischerweise in Fasermatten, Filzen oder Vliesen enthalten, wobei die einzelnen Fasern ebenfalls gestreckt in einer Ebene und/oder ungestreckt mit Komponenten in allen drei Raumrichtungen vorliegen können.

Weiterhin kann die Faserverstärkung als mindestens eine Faserschicht vorgesehen sein, in der die Fasern geordnet und/oder ungeordnet entlang der Schicht verteilt sein können und/oder in einem Flächengebilde wie in einem Gewebe, einem Multiaxialgelege, einem Geflecht, einem Feinschnitt, einem Abstandsgewebe, einem Gestrick, einem Gelege, einer Fasermatte, einem Filz oder einem Vlies entlang der Schicht enthalten sein können. In dieser Ausgestaltung ist die Anordnung der Fasern in einer Dimension auf die Faserschicht beschränkt und die Fasern sind im Wesentlichen in der Ebene der zweidimensionalen Faserschicht angeordnet. Die Faserschicht kann dabei eine Dicke zwischen 1 und 500 µm, bevorzugt zwischen 7 und 150 µm, aufweisen.

Die im Rahmen der vorliegenden Erfindung verwendeten Fasern weisen vorzugsweise eine hohe Festigkeit auf, um die Stabilität der Membran zu erhöhen. Vorzugsweise ist die Festigkeit über die Zugfestigkeit bestimmt, die für einzelne Fasern zwischen 2000 und 7000 MPa, vorzugsweise zwischen 3000 und 5000 MPa, liegen kann. Diese Eigenschaften liefern unter anderen synthetische Fasern, wie Polyethylen-Fasern, Glasfasern, Kohlenstofffasern, Keramikfasern, Aramidfasern, Mineralfasern, insbesondere Basaltfasern oder beliebige Kombination einer oder mehrerer dieser Fasern. Die Fasern der Faserverstärkung können ferner gleiche oder unterschiedliche Dimensionen aufweisen. So können die Länge und/oder der Querschnitt der Fasern variieren.

Erfindungsgemäß wird ein Verfahren gemäss Anspruch 10 zur Herstellung eines Schallwandlers wie vorstehend beschrieben vorgeschlagen. In der Ausgestaltung des erfindungsgemäßen Herstellungsverfahrens wird die Basiselektrode massiv aus einem metallischen Werkstoff oder als Leiterplatte ausgebildet. Für die Ausführung des Schallwandlers als Sellwandler wird die Basiselektrode ferner mit einer Oberflächenrauheit versehen, die unter anderem durch Polieren, Bedampfen oder Schleifen eingestellt werden kann. Alternativ oder zusätzlich kann die Oberflächenrauheit durch Strukturieren der Oberfläche beispielsweise durch Sputtern, Ätzen oder Fräsen von speziellen Formen wie V-förmigen oder U-förmigen Kerben bewirkt werden. Im Fall von Leiterplatten können auch Standardmethoden zum Strukturieren von Leiterbahnzügen auf Leiterplatten zum Herstellen der Basiselektrode verwendet werden. Die Verwendung von Leiterplatten hat dabei den Vorteil, dass eine Leiterplatte mit zusätzlichen Schaltungselementen versehen werden kann.

In einer weiteren Ausgestaltung des erfindungsgemäßen Herstellungsverfahrens wird die Membran durch Laminieren, Spritzgießen, Spritzpressen, Extrudieren oder Verstrecken hergestellt. Weiterhin kann die Membran aus mindestens einem Polymer hergestellt werden, wobei das Polymer Polyamid (PA), Polyimid (PI), Polyethylenterephthalat (PET), biaxial orientiertes PET, Polysulfon (PSu), Polyacrylnitril, ein per- oder teilfluoriertes Polymer, ein teilkristallines Polymer, beispielsweise Polyvinylfluorid (PVF) oder ein Copolymer von Vinylfluorid mit Tetrafluorethylen oder Trifluorethylen, insbesondere biaxial gestreckten Polyvinylidenfluorid (PVDF) sein kann. Alternative Ausführungsformen des erfindungsgemäßen Wandlers können auch eine Membran aus mindestens einem Metall aufweisen.

In einer weiteren Ausgestaltung des erfindungsgemäßen Herstellungsverfahrens wird die Membran einseitig metallisiert, um mindestens eine elektrisch leitfähige Schicht auf der der Basiselektrode abgewandten Seite der Membran und mindestens eine isolierende Schicht auf der der Basiselektrode zugewandten Seite der Membran auszubilden. Die elektrisch leitfähige Schicht kann mittels elektrisch leitfähiger Fasern wie Kohlenstofffasern hergestellt werden. Auf diese Weise kann sowohl die elektrische Leitfähigkeit als auch die Verstärkungswirkung der Schicht realisiert werden. In einer weiteren Ausgestaltung des erfindungsgemäßen Herstellungsverfahrens für einen als Sellwandler ausgestalteten Ultraschallsensors wird die Membran mit mindestens einer der isolierenden Schichten unmittelbar auf der Basiselektrode aufgebracht.

Vorzugsweise wird die Faserverstärkung oberhalb der isolierenden Schicht eingebracht, die unmittelbar an die Basiselektrode grenzt. In einer weiteren Variante des erfindungsgemäßen Herstellungsverfahrens wird die Faserverstärkung in einem oberen Bereich der Membran eingebracht. Weiterhin kann die Faserverstärkung an der Seite der Membran eingebracht werden, die der Basiselektrode abgewandt ist.

Das Einbringen der Faserverstärkung in die Membran kann auf unterschiedliche Weisen erfolgen, wobei die Faserverstärkung Kurzfasern mit einer Länge von 0,1 bis 1 mm, Langfasern mit einer Länge von 1 mm bis 50 mm und/oder Endlosfasern umfassen kann, die geordnet und/oder ungeordnet verteilt sein können und/oder in einem geordneten und/oder ungeordneten Flächengebilde enthalten sein können. Eine solche Faserverstärkung kann vor Aushärten der Membran in diese eingebracht werden oder mit der Membran verklebt werden. Möglich ist auch eine direkte Herstellung der Membran mit Fasern.

### Vorteile der Erfindung

Die Erfindung ermöglicht es, auf einfache Art und Weise die mechanische Robustheit eines Wandlers, insbesondere eines Ultraschallwandlers, zu erhöhen und diesen effektiv vor Umwelteinflüssen zu schützen. So kann beispielsweise das Auftreten von Rissen aufgrund von äußeren Einwirkungen auf die Membran des Wandlers vermieden werden, indem eine Faserverstärkung in der Membran vorgesehen wird.

Dazu werden Fasern verwendet, die im Vergleich zu den weiteren Komponenten der Membran eine hohe Steifigkeit aufweisen und Zug- und/oder Druckkräfte aufnehmen können. Diese Wirkung der Fasern wird dabei maßgeblich längs der einzelnen Fasern erreicht. Quer zu den einzelnen Fasern ergibt sich dagegen eine ähnliche Zug- und/oder Druckfestigkeit wie die der weiteren Komponenten der Membran. Daher kann durch unterschiedliche Anordnung der einzelnen Fasern in den verschiedenen Raumrichtungen bzw. durch unterschiedliche Dimensionierung der einzelnen Fasern der Effekt der Faserverstärkung an die jeweiligen Anforderungen angepasst werden. Durch die Faserverstärkung kann insbesondere sichergestellt werden, dass die Membran trotz Umwelteinflüssen intakt bleibt und das Innere des Wandlers vor Feuchtigkeit geschützt bleibt. Dies resultiert insgesamt in einer erhöhten Zuverlässigkeit und einer erhöhten Lebensdauer des Wandlers, der zusätzlich einfach und kostengünstig herzustellen ist.

Im Vergleich zum Vorsehen einer zusätzlichen Schutzschicht wird die Masse der Membran durch erfindungsgemäß vorgeschlagene Lösung nur minimal erhöht. Damit bleiben die hohe Sensitivität und die große Bandbreite eines als Sellwandler ausgestalteten Schallwandlers erhalten. Der erfindungsgemäß vorgeschlagene Schallwandler ist daher für Anwendungen in rauen Umgebungen und insbesondere für den Einsatz als Abstandssensor besonders geeignet.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: einen erfindungsgemäßen Schallwandler ausgestaltet als Sellwandler in schematischer Darstellung,
- Figur 2: den Schallwandler gemäß Fig. 1 in der Detailansicht,
- Figur 3: eine beispielhafte Ausführung des erfindungsgemäßen Schallwandlers mit einer faserverstärkten Membran in der Detailansicht,
- Figur 4: eine weitere beispielhafte Ausführung des erfindungsgemäßen Schallwandlers mit einer faserverstärkten Membran in der Detailansicht, wobei die Wirkung einer Zugkraft auf die Membran illustriert ist,
- Figur 5: eine weitere beispielhafte Ausführung des erfindungsgemäßen Schallwandlers mit einer Membran, die durch ein Fasergewebe verstärkt ist,
- Figur 6: ein Flussdiagramm, das den Ablauf des Verfahrens zur Herstellung des erfindungsgemäßen Schallwandlers illustriert.

### Ausführungsformen der Erfindung

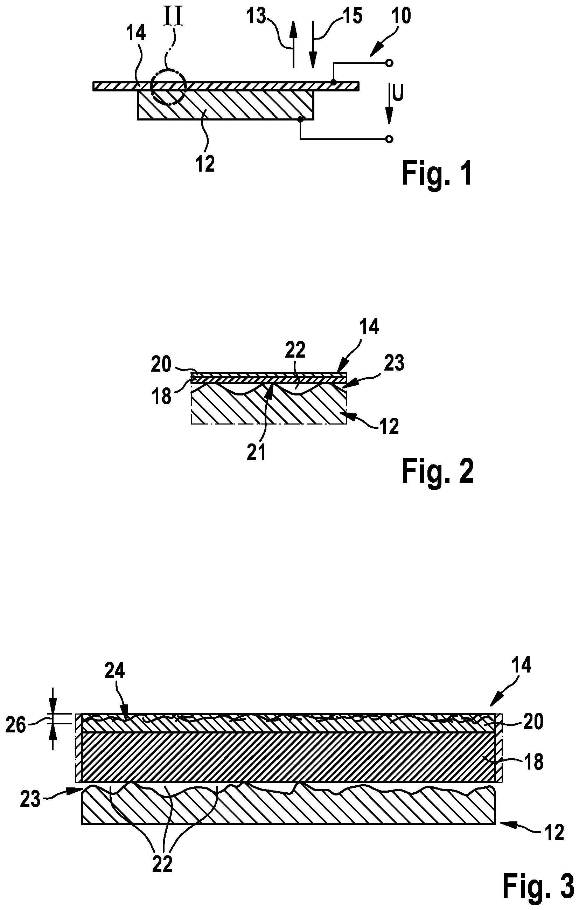

Figur 1 zeigt schematisch den Aufbau eines Schallwandlers, der als Sellwandler 10 ausgestaltet ist. Dieser umfasst eine massive Basiselektrode 12, die aus einem Metall gefertigt ist. Über die Basiselektrode 12 ist eine schwingfähige Membran 14 gespannt, die eine isolierende Schicht 18 und eine metallisierte Schicht 20 aufweist. Um den Sellwandler 10 zum Senden von Schallwellen in Ausbreitungsrichtung 13 anzuregen, wird zwischen der Basiselektrode 12 und der Membran 14 eine Wechselspannung U angelegt. Dabei kann der Sellwandler 10 unterhalb der Resonanzfrequenz betrieben werden, um ein breitbandigeres Frequenzspektrum zu erzeugen. Alternativ kann der Sellwandler 10 Schallwellen, die in Ausbreitungsrichtung 15 von einem Objekt reflektiert werden, empfangen, indem Änderungen im Spannungsverlauf U zwischen der Basiselektrode 12 und der Membran 14 detektiert werden. Beim Senden und Empfangen von Ultraschallwellen bildet die Membranseite des Sellwandlers 10 die empfindliche Seite, welche zum zu detektierenden Objekt hin gerichtet ist.

Eine Detailansicht der Basiselektrode 12 und der Membran 14 des Sellwandlers 10 ist in Figur 2 schematisch dargestellt. Die Basiselektrode 12 weist eine Oberflächenrauheit 23 auf, die in der gezeigten Ausführungsform ein wellenförmiges Profil hat. In anderem Ausführungsformen kann die Oberflächenrauheit 23 auch andere Profile annehmen, insbesondere können herstellungsbedingte Unregelmäßigkeiten schon ausreichen. Die Membran 14 kann aus einem Polymer wie PI, PET, PVF, PVDF, PA oder PSu oder einer Kombination von Polymeren hergestellt werden. Die Membran 14 umfasst ferner eine elektrisch leitfähige Schicht 20, die zum Beispiel durch das Einbringen von metallischen Partikeln, elektrisch elektrisch leitfähige Kohlenstofffasern oder Rußpartikeln hergestellt werden kann. Dabei werden die Partikel einseitig in die Membran 14 eingebracht, so dass eine isolierende Schicht 18 bestehen bleibt. Die Membran kann auch schichtweise durch Verkleben einer elektrisch leitfähigen und einer isolierenden Schicht 18, 20 hergestellt werden. Alternativ kann eine elektrisch leitfähige Schicht auf die Membran 14 aufgedampft werden.

In einem Sellwandler liegt die Membran 14 mit der isolierenden Schicht 18 auf den Erhebungen 21 der Basiselektrode 12 auf. Dadurch sind die Basiselektrode 12 und die elektrisch leitfähige Schicht 20 der Membran 14, die die Gegenelektrode bildet, elektrisch voneinander isoliert. Der Aufbau ähnelt somit einem Plattenkondensator, wobei die Oberflächenrauheit 23 der Basiselektrode 12 und die Dicke der isolierenden Schicht 18 die Kapazität des Aufbaus maßgeblich beeinflussen.

Zwischen der rauen Oberfläche 23 der Basiselektrode 12 und der Membran 14 sind ferner Hohlräume 22 ausgebildet, in denen die Membran 14 schwingen kann. Das Volumen der Hohlräume 22 kann die Resonanzfrequenz des Sellwandlers 10 beeinflussen, da die Knotenpunkte der schwingfähigen Membran 14 durch die Erhebungen 21 der Basiselektrode 12 gegeben sind, auf denen die Membran 14 aufliegt. Die Hohlräume beeinflussen die Steifigkeit der Membran und bestimmen unter anderem das Frequenzspektrum des Sellwandlers. Das Volumen der Hohlräume 22 wirkt sich zusätzlich auf die maximale Amplitude der schwingfähigen Membran 14 aus.

Figur 3 zeigt beispielhaft eine Ausführungsform einer Membran 14, die eine isolierende Schicht 18 und eine elektrisch leitfähige Schicht 20 umfasst. Die Membran 14 liegt hierbei mit der isolierenden Schicht 18 auf der Basiselektrode 12 auf, die die Oberflächenrauheit 23 aufweist. In diesem Beispiel wird die Oberflächenrauheit 23 von unregelmäßigen Erhebungen 21 gebildet. Dadurch werden Hohlräume 22 mit unterschiedlichen Volumina gebildet, wobei ein größeres Volumen zu einer geringen Steifigkeit der Membran führt und dadurch in einer niedrigeren Resonanzfrequenz resultiert. Zusätzlich kann der Sellwandler 10 unterhalb der Resonanzfrequenz betrieben werden, um ein breitbandigeres Frequenzspektrum zu erzeugen.

Die Membran 14 umfasst zusätzlich zu der isolierenden Schicht 18 und der elektrisch leitfähigen Schicht 20 eine Faserverstärkung 24. In der in Figur 3 gezeigten Ausführungsform ist die Faserverstärkung 24 im oberen Bereich 26 nahe der Membranoberfläche vorgesehen. Die Faserverstärkung 24 ist ferner durch einzelne, ungeordnet verteilte Fasern in einer Faserschicht ausgestaltet, wobei die Faserschicht in der elektrisch leitfähigen Schicht 20 der Membran 14 ausgebildet ist. Die einzelnen Fasern weisen dabei unterschiedliche Längen auf und können im Durchmesser unterschiedlich sein.

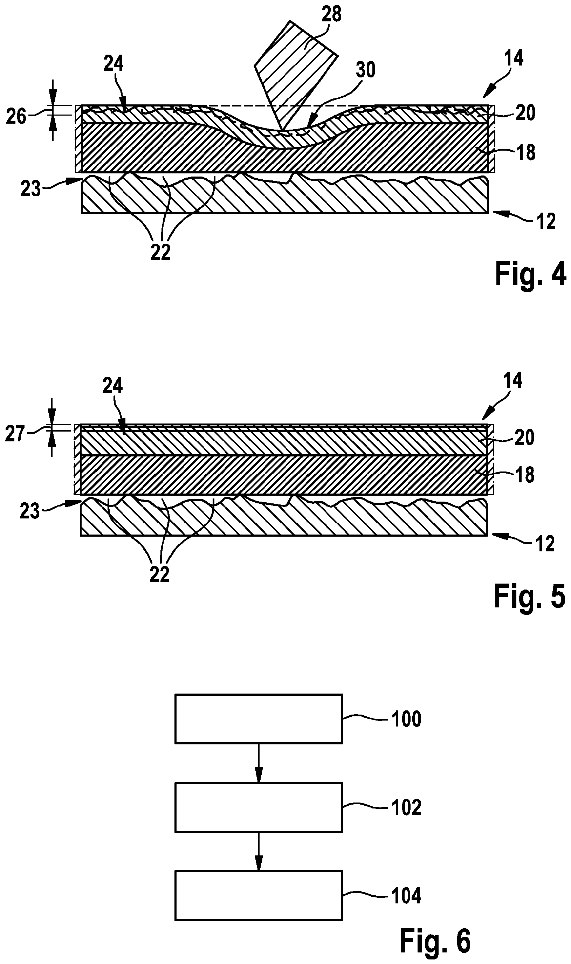

Trifft, wie in Figur 4 beispielhaft gezeigt, ein Gegenstand 28 auf die faserverstärkte Membran 14 auf, wirkt eine Zugspannung 30 auf die Membran 14. Dadurch verformt sich die Membran 14, wobei die strichlierte Linie in Figur 4 den Ursprungszustand der Membran 14 andeutet. Durch die Faserverstärkung 24 werden die Festigkeit und damit die mechanische Robustheit der Membran 14 erhöht. Denn die Fasern verleihen der Membran 14 insbesondere an der Oberfläche eine höhere Festigkeit. Auf diese Weise wird der Sellwandler 10 vor Umwelteinflüssen geschützt, indem die Zugkräfte von den Fasern aufgenommen werden und somit Risse oder sonstige Beschädigungen der Membran 14 vermieden werden.

In Figur 5 ist beispielhaft eine weitere Ausführungsform einer faserverstärkten Membran 14 dargestellt. Analog zu Figur 3 umfasst die Membran 14 eine isolierende Schicht 18 und eine elektrisch leitfähige Schicht 20, wobei die Membran 14 mit der isolierenden Schicht 18 unmittelbar auf einer Basiselektrode 12 mit einer Oberflächenrauheit 23 aufliegt.

In der in Figur 5 gezeigten Ausführungsform ist die Faserverstärkung 24 ebenfalls im oberen Bereich 26 nahe der Membranoberfläche vorgesehen. Die Faserverstärkung 24 umfasst ferner eine Faserschicht 27, die als Gewebe, Multiaxialgelege, Geflecht, Feinschnitt, Abstandsgewebe, Gestrick, Gelege, Fasermatte, Filz oder Vlies ausgestaltet sein kann. In einer geordneten Faserschicht 27, beispielsweise einem Gestrick, verlaufen die Fasern typischerweise in Längs- und/oder Querbahnen. Die Fasern können allerdings auch ungeordnet entlang der Faserschicht 27 angeordnet sein, wie dies für Filze oder Vliese typisch ist. Die Faserschicht ist ferner parallel zur Oberfläche der Membran 14 ausgerichtet. Durch die Faserschicht 27 und insbesondere durch eine geordnete Faserschicht 27 mit Fasern in Längs- und/oder Querbahnen kann eine hohe Festigkeit erreicht werden und somit die Membran 14 insbesondere an der Oberfläche stabilisiert werden.

Neben der Anordnung der Fasern in der Faserschicht 27 können auch die Länge und die Dimension der einzelnen Fasern variieren. Im Bezug auf die Festigkeit der Membran 14, insbesondere die Zugfestigkeit, hat sich die Verwendung von Lang- oder Endlosfasern als vorteilhaft erwiesen. Eine Membran mit einer Faserverstärkung 24 umfassend Kurzfasern weist dagegen eine erhöhte Druckfestigkeit der Membran 14 auf. Sowohl Kurzfasern als auch Lang- oder Endlosfasern können direkt beim Spritzgießen oder Extrudieren in die Membran 14 eingebracht werden. Langfasern richten sich dabei allerdings entlang des Strömungsweges aus.

Figur 6 illustriert eine Variante zum Herstellen des erfindungsgemäß vorgeschlagenen Schallwandlers 10, der als Sellwandler ausgestaltet ist. Dazu wird in Schritt 100 eine Basiselektrode 12 hergestellt, die massiv ausgestaltet ist und eine Oberflächenrauheit 23 aufweist. In Schritt 102 wird eine Membran 14 aus einem Polymer wie PVDF hergestellt. Im Rahmen dieses Herstellungsschritts werden die elektrisch leitfähige Schicht 20 und die Fasern für die Faserverstärkung 24 einseitig in die Membran 14 eingebracht, so dass auf der gegenüberliegenden Seite der Membran 14 eine isolierende Schicht 18 erhalten bleibt.

Alternativ können die einzelnen Schichten 18, 20, 24 der Membran 14 auch jeweils einzeln hergestellt werden und anschließend durch beispielsweise Verkleben oder Verschweißen stoffschlüssig miteinander verbunden werden. Die Fasern der Faserverstärkung 24 werden in beiden Fällen in einen oberen Bereich der Membran 14 in die elektrisch leitfähige Schicht 20 eingebracht und verleihen der Membran 14 eine höhere Stabilität. In einem letzten Schritt wird die Membran 14 auf der Basiselektrode 12 befestigt, wobei die isolierende Schicht 18 der Membran 14 unmittelbar auf der Basiselektrode 12 vorgesehen wird.

Mit der faserverstärkten Membran 14 wird der Schallwandler 10 vor Umwelteinflüssen geschützt. Insbesondere beim Einsatz als Abstandsmesser beispielsweise für eine fahrende Plattform ist der Schallwandler 10, wobei der Schallwandler 10 zum Senden und/oder Empfangen von Ultraschallwellen so ausgerichtet ist, dass Objekte im Umfeld detektiert werden können. Dabei breiten sich die Ultraschallwellen über die schwingfähige Membran 14 in das betreffende Umfeld aus oder werden über die schwingfähige Membran 14 aus dem betreffenden Umfeld detektiert. Die Membran 14 ist somit allen Umwelteinflüssen ausgesetzt, die typischerweise in einer rauen Umgebung auftreten. Beispielsweise können Einwirkungen, Vibrationen oder Feuchtigkeit auf die Membran 14 einwirken. Insbesondere unter solchen Bedingungen stellt die Faserverstärkung 24 der Membran 14 einen sicheren Schutz für den Schallwandler 10 bereit.

## Patentansprüche

1. Schallwandler (10) umfassend eine Basiselektrode (12) und eine schwingfähige Membran (14) mit mindestens einer elektrisch leitfähigen Schicht (20), wobei zwischen der Basiselektrode (12) und der elektrisch leitfähigen Schicht der schwingfähigen Membran (14) mindestens eine isolierende Schicht (18) vorgesehen ist, **dadurch gekennzeichnet, dass** die schwingfähige Membran (14) eine Faserverstärkung (24) umfasst, die durch das Einbringen von Fasern in die Membran realisiert ist.

2. Schallwandler (10) gemäß Anspruch 1, **dadurch gekennzeichnet, dass** die Membran (14) mindestens eine isolierende Schicht (18) und mindestens eine elektrisch leitfähige Schicht (20) aufweist.

3. Schallwandler (10) gemäß einem der Ansprüche 1 oder 2, **dadurch gekennzeichnet, dass** die Basiselektrode (12) eine Oberflächenrauheit (23) aufweist und die Membran (14) mit mindestens einer isolierenden Schicht (18) unmittelbar auf der Basiselektrode (12) aufliegt.

4. Schallwandler (10) gemäß einem der Ansprüche 1 bis 3, **dadurch gekennzeichnet, dass** die Faserverstärkung (24) in einem oberen Bereich (26) der Membran (14), vorzugsweise an der Seite der Membran (14), die der Basiselektrode (12) abgewandt ist, vorgesehen ist.

5. Schallwandler (10) gemäß einem der Ansprüche 1 bis 4, **dadurch gekennzeichnet, dass** die Faserverstärkung (24) Kurzfasern, Langfasern und/oder Endlosfasern umfasst.

6. Schallwandler (10) gemäß Anspruch 5, **dadurch gekennzeichnet, dass** die Faserverstärkung (24) einzelne in die Membran (14) eingebettete Fasern umfasst, die geordnet und/oder ungeordnet verteilt sein können und/oder geordnet und/oder ungeordnet in mindestens einem Flächengebilde enthalten sind.

7. Schallwandler (10) gemäß einem der Ansprüche 5 oder 6, **dadurch gekennzeichnet, dass** die Faserverstärkung (24) als mindestens eine Faserschicht (27) vorgesehen ist, in der Fasern geordnet und/oder ungeordnet entlang der Schicht verteilt und/oder in einem Flächengebilde entlang der Schicht angeordnet sind.

8. Schallwandler (10) gemäß einem der Ansprüche 1 bis 7, **dadurch gekennzeichnet, dass** die Faserverstärkung (24) synthetische Fasern, Glasfasern, Kohlenstofffasern, Keramikfasern, Aramidfasern, Mineralfaser oder eine Kombination hieraus umfasst.

9. Schallwandler (10) gemäß einem der Ansprüche 1 bis 8, **dadurch gekennzeichnet, dass** die Faserverstärkung (24) Fasern mit gleichen oder unterschiedlichen Dimensionen aufweist.

10. Verfahren zur Herstellung eines Schallwandlers (10) umfassend folgende Schritte:
a) Herstellen (100) einer Basiselektrode (12);
b) Herstellen (102) einer schwingfähigen Membran (14), wobei die schwingfähige Membran (14) mindestens eine elektrisch leitfähige Schicht (20) und eine Faserverstärkung (24) umfasst oder die schwingfähige Membran eine elektrisch leitfähige Faserverstärkung (24) aufweist, wobei die Faserverstärkung durch das Einbringen von Fasern in die Membran realisiert ist;
c) Aufbringen (104) der schwingfähigen Membran (14) auf die Basiselektrode (12).

11. Verfahren gemäß Anspruch 10, **dadurch gekennzeichnet, dass** die schwingfähige Membran (14) unmittelbar auf die Basiselektrode (12) aufgebracht wird und beim Aufbringen der Membran (14) auf die Basiselektrode (12) zwischen der Basiselektrode (12) und der elektrisch leitfähigen Schicht der Membran (14) mindestens eine isolierende Schicht (18) vorgesehen wird.

12. Verfahren gemäß einem der Ansprüche 10 oder 11, **dadurch gekennzeichnet, dass** die Faserverstärkung (24) in einem oberen Bereich (26) der Membran (14) und bevorzugt auf der Seite der Membran (14), die der Basiselektrode (12) abgewandt ist, eingebracht wird.

## Claims

1. Sound transducer (10) comprising a base electrode (12) and a diaphragm (14) which can oscillate and which has at least one electrically conductive layer (20), at least one insulating layer (18) being provided between the base electrode (12) and the electrically conductive layer of the diaphragm (14) which can oscillate, **characterized in that** the diaphragm (14) which can oscillate comprises a fibre reinforcement (24), which is obtained by introducing fibres into the diaphragm.

2. Sound transducer (10) according to Claim 1, **characterized in that** the diaphragm (14) has at least one insulating layer (18) and at least one electrically conductive layer (20).

3. Sound transducer (10) according to either of Claims 1 and 2, **characterized in that** the base electrode (12) has a surface roughness (23) and the diaphragm (14) with at least one insulating layer (18) rests directly on the base electrode (12).

4. Sound transducer (10) according to one of Claims 1 to 3, **characterized in that** the fibre reinforcement (24) is provided in an upper region (26) of the diaphragm (14), preferably on the side of the diaphragm (14) that is facing away from the base electrode (12).

5. Sound transducer (10) according to one of Claims 1 to 4, **characterized in that** the fibre reinforcement (24) comprises short fibres, long fibres and/or continuous fibres.

6. Sound transducer (10) according to Claim 5, **characterized in that** the fibre reinforcement (24) comprises individual fibres embedded in the diaphragm (14), which fibres may be distributed in an orderly and/or random arrangement and/or be contained in an orderly and/or random arrangement in at least one sheet-like structure.

7. Sound transducer (10) according to either of Claims 5 and 6, **characterized in that** the fibre reinforcement (24) is provided as at least one fibre layer (27), in which fibres are distributed in an orderly and/or random arrangement along the layer and/or are arranged in a sheet-like structure along the layer.

8. Sound transducer (10) according to one of Claims 1 to 7, **characterized in that** the fibre reinforcement (24) comprises synthetic fibres, glass fibres, carbon fibres, ceramic fibres, aramid fibres, mineral fibres or a combination thereof.

9. Sound transducer (10) according to one of Claims 1 to 8, **characterized in that** the fibre reinforcement (24) has fibres with the same or different dimensions.

10. Method for producing a sound transducer (10) comprising the following steps:
a) producing (100) a base electrode (12);
b) producing (102) a diaphragm (14) which can oscillate, the diaphragm (14) which can oscillate comprising at least one electrically conductive layer (20) and a fibre reinforcement (24) or the diaphragm which can oscillate having an electrically conductive fibre reinforcement (24), the fibre reinforcement being obtained by introducing fibres into the diaphragm;
c) applying (104) the diaphragm (14) which can oscillate to the base electrode (12).

11. Method according to Claim 10, **characterized in that** the diaphragm (14) which can oscillate is applied directly to the base electrode (12) and, when applying the diaphragm (14) to the base electrode (12), at least one insulating layer (18) is provided between the base electrode (12) and the electrically conductive layer of the diaphragm (14) .

12. Method according to either of Claims 10 and 11, **characterized in that** the fibre reinforcement (24) is introduced in an upper region (26) of the diaphragm (14) and preferably on the side of the diaphragm (14) that is facing away from the base electrode (12).

## Revendications

1. Transducteur acoustique (10) comprenant une électrode de base (12) et une membrane oscillante (14) dotée d'au moins une couche électriquement conductrice (20), dans lequel il est prévu au moins une couche isolante (18) entre l'électrode de base (12) et la couche électriquement conductrice de la membrane oscillante (14), **caractérisé en ce que** la membrane oscillante (14) comprend un renforcement de fibres (24) qui est réalisé par introduction de fibres dans la membrane.

2. Transducteur acoustique (10) selon la revendication 1, **caractérisé en ce que** la membrane (14) comprend au moins une couche isolante (18) et au moins une couche électriquement conductrice (20).

3. Transducteur acoustique (10) selon l'une des revendications 1 ou 2, **caractérisé en ce que** l'électrode de base (12) comprend une rugosité de surface (23) et **en ce que** la membrane (14) repose directement sur l'électrode de base (12) par l'intermédiaire d'au moins une couche isolante (18).

4. Transducteur acoustique (10) selon l'une des revendications 1 à 3, **caractérisé en ce que** le renforcement de fibres (24) est prévu dans une zone supérieure (26) de la membrane (14), de préférence sur la face de la membrane (14) qui est tournée à l'opposé de l'électrode de base (12).

5. Transducteur acoustique (10) selon l'une des revendications 1 à 4, **caractérisé en ce que** le renforcement des fibres (24) comprend des fibres courtes, des fibres longues et/ou des fibres continues.

6. Transducteur acoustique (10) selon la revendication 5, **caractérisé en ce que** le renforcement de fibres (24) comprend des fibres individuelles incorporées dans la membrane (14), qui peuvent être distribuées de manière ordonnée et/ou désordonnée et/ou qui sont contenues de manière ordonnée et/ou désordonnée dans au moins une structure plane.

7. Transducteur acoustique (10) selon l'une des revendications 5 ou 6, **caractérisé en ce que** le renforcement de fibres (24) est prévu sous la forme d'au moins une couche de fibres (27) dans laquelle des fibres sont réparties de manière ordonnée et/ou désordonnée le long de la couche et/ou disposées dans une structure plane le long de la couche.

8. Transducteur acoustique (10) selon l'une des revendications 1 à 7, **caractérisé en ce que** le renforcement des fibres (24) comprend des fibres synthétiques, des fibres de verre, des fibres de carbone, des fibres de céramique, des fibres d'aramide, des fibres minérales ou une combinaison de celles-ci.

9. Transducteur acoustique (10) selon l'une des revendications 1 à 8, **caractérisé en ce que** le renforcement de fibres (24) comprend des fibres de dimensions identiques ou différentes.

10. Procédé de fabrication d'un transducteur acoustique (10) comprenant les étapes consistant à :
a) produire (100) une électrode de base (12) ;
b) produire (102) une membrane oscillante (14), dans lequel la membrane oscillante (14) comprend au moins une couche électriquement conductrice (20) et un renforcement de fibres (24) ou la membrane oscillante comporte un renforcement de fibres électriquement conductrices (24), dans lequel le renforcement de fibres est réalisé par introduction de fibres dans la membrane ;
c) appliquer (104) la membrane oscillante (14) sur l'électrode de base (12).

11. Procédé selon la revendication 10, **caractérisé en ce que** la membrane oscillante (14) est directement appliquée sur l'électrode de base (12) et **en ce qu'**il est prévu au moins une couche isolante (18) entre l'électrode de base (12) et la couche électriquement conductrice de la membrane (14) lorsque la membrane (14) est appliquée sur l'électrode de base (12).

12. Procédé selon l'une des revendications 10 ou 11, **caractérisé en ce que** le renforcement de fibres (24) est introduit dans une zone supérieure (26) de la membrane (14) et de préférence sur la face de la membrane (14) qui est tournée à l'opposé de l'électrode de base (12) .
